**Europäisches Patentamt**

**European Patent Office**

**Office européen des brevets**

(19)

(11) Veröffentlichungsnummer : **0 334 337 B1**

(12) **EUROPÄISCHE PATENTSCHRIFT**

(45) Veröffentlichungstag der Patentschrift :
**27.05.92 Patentblatt 92/22**

(51) Int. Cl.⁵ : **G06F 7/02, G06F 15/40**

(21) Anmeldenummer : **89105170.8**

(22) Anmeldetag : **22.03.89**

(54) **Verfahren und Schaltungsanordnung zum Erkennen einer Sequenz in einer Folge von Daten.**

(30) Priorität : **25.03.88 DE 3810227**

(43) Veröffentlichungstag der Anmeldung :
**27.09.89 Patentblatt 89/39**

(45) Bekanntmachung des Hinweises auf die
Patenterteilung :
**27.05.92 Patentblatt 92/22**

(84) Benannte Vertragsstaaten :
**CH DE FR GB IT LI SE**

(56) Entgegenhaltungen :
**US-A- 3 784 980**

(73) Patentinhaber : **SIEMENS
AKTIENGESELLSCHAFT
Wittelsbacherplatz 2
W-8000 München 2 (DE)**

(72) Erfinder : **Neumann, Hans, Dipl.-Ing.
Wolframstrasse 20 A
W-8190 Wolfratshausen (DE)**

EP 0 334 337 B1

Jouve, 18, rue Saint-Denis, 75001 PARIS

**Beschreibung**

Die Erfindung bezieht sich auf ein Verfahren zum Erkennen vorgegebener Sequenzen in einer Folge von Daten gemäß dem Oberbegriff des Patentanspruchs 1. Weiterhin bezieht sich die Erfindung auf eine Schaltungsanordnung zur Durchführung des Verfahrens.

Es ist bereits allgemein bekannt, zum Erkennen vorgegebener Sequenzen in einer Folge von ankommenden Daten diese Daten in einem Pufferspeicher zu speichern und den Inhalt des Pufferspeichers mit in einem Speicher gespeicherten Sequenzen aufeinanderfolgend zu vergleichen. Zu diesem Zweck werden einem Vergleicher die in dem Pufferspeicher gespeicherten Daten und die in dem Speicher gespeicherten Sequenzen zugeführt und wenn der Vergleicher eine Übereinstimmung zwischen den gespeicherten Daten und einer zugeführten Sequenz erkennt, gibt dieser ein Ausgangssignal ab. Ein derartiges Verfahren erfordert verhältnismäßig viel Zeit, da jeweils jede Folge von gespeicherten Daten mit allen gespeicherten Sequenzen verglichen werden muß oder für jede zu erkennende Sequenz der jeweilige Erkennungsstand gemerkt werden muß, das wiederum eine Abhängigkeit der Auswertung von der Anzahl der zu erkennenden Sequenzen ergibt. Das Verfahren hat außerdem den Nachteil, daß bei unterschiedlich langen Sequenzen ein verhältnismäßig großer Aufwand erforderlich ist.

Der Erfindung liegt daher die Aufgabe zugrunde, ein Verfahren und eine Schaltungsanordnung zum Erkennen vorgegebener Sequenzen in einer Folge von Daten anzugeben, wobei die Anzahl der zu erkennenden Sequenzen praktisch unbegrenzt ist und die Sequenzen mit verhältnismäßig geringem Aufwand und sehr schnell erkannt werden.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß Sequenzen beliebiger Länge, lediglich begrenzt durch die Länge des Pufferspeichers, sehr schnell erkannt werden, da das Erkennen dynamisch erfolgt. Die Steuerung des Anfangs und des Endes der gespeicherten Daten erfolgt vorteilhafterweise unter Verwendung von zwei Zeigern, die durch eine Zeigersteuerung gesteuert werden und die zu vergleichenden Daten im Pufferspeicher angeben. Beim Erkennen einer vollständigen Sequenz werden der Anfang und das Ende zurückgesetzt, vorteilhafterweise auf die Stelle des Ende-Zeigers, um eine große Dynamik zu erreichen.

Für die Verarbeitung von Sequenzen mit unterschiedlicher Länge ist es günstig, wenn die Sequenzen in dem Speicher unter Angabe ihrer Längen gespeichert werden.

Eine besonders große Dynamik des Verfahrens wird insbesondere dann erreicht, wenn der Vergleich nur dann begonnen wird, wenn der Abstand zwischen dem Anfang und dem Ende der Daten zumindest gleich ist der Länge einer minimalen Sequenz und/oder wenn der Vergleich nur dann durchgeführt wird, wenn der Abstand zwischen dem Anfang und dem Ende der gespeicherten Daten kleiner oder gleich ist der Länge der Sequenz, die gerade mit den gespeicherten Daten verglichen wird.

Eine weitere Beschleunigung und Vereinfachung des Verfahrens wird dadurch erreicht, daß die Sequenzen nur abdruckbare Zeichen enthalten und alle nicht abdruckbaren Zeichen vor dem Einspeichern in den Pufferspeicher abgetrennt werden.

Eine einfache Schaltungsanordnung ist gekennzeichnet durch eine Zeigersteuerung, die jeweils den Anfang und das Ende der zu vergleichenden Daten angibt und durch eine Steuereinheit, die an die Zeigersteuerung ereignisgesteuert Signale zum Verschieben des Anfangs und/oder des Endes der zu vergleichenden Daten abgibt, die jeweils den Vergleich der gespeicherten Daten mit den gespeicherten Sequenzen durchführt und die beim Erkennen einer vollständigen Sequenz das Ausgangssignal abgibt.

Die Zeigersteuerung und die Steuereinheit werden vorzugsweise aus zumindest einem Mikrocomputer gebildet.

Die Durchführung des Verfahrens gemäß der Erfindung wird im folgenden anhand einer Schaltungsanordnung näher erläutert. Es zeigen

FIG 1 ein Blockschaltbild einer Schaltungsanordnung zur Durchführung des Verfahrens,

FIG 2 eine schematische Darstellung der Durchführung des Verfahrens und

FIG 3 eine Blockstruktur, mittels der Sequenzen in einem Speicher gespeichert werden.

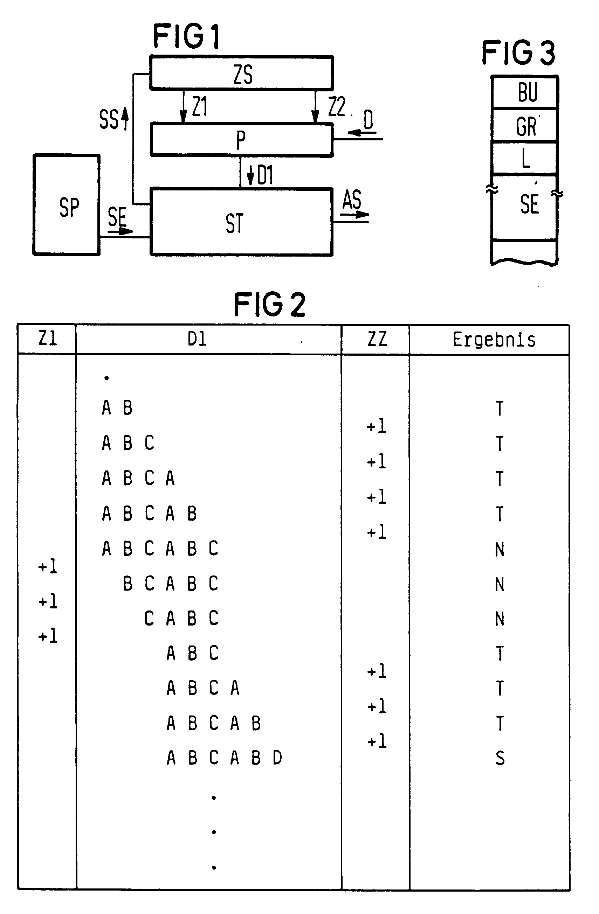

Bei der in FIG 1 dargestellten Schaltungsanordnung sind in einem Speicher SP mehrere Sequenzen SE gespeichert, von denen mindestens eine in einer ankommenden Folge von Daten D erkannt werden soll. Die Daten D werden in einem Pufferspeicher P gespeichert, der beispielsweise als First-In-First-Out (FIFO)-Speicher oder als ein Ringpuffer ausgebildet ist. Mit dem Pufferspeicher P ist eine Steuereinheit ST verbunden, der jeweils mindestens ein Teil der im Pufferspeicher P gespeicherten, zu vergleichenden Daten D1 zugeführt wird. Die Steuereinheit ST ist andererseits mit dem Speicher SP verbunden, aus dem sie für den Vergleich mit den Daten D1 die Sequenzen SE ausliest. Die Steuereinheit ST gibt ein Steuersignal SS an eine Zeigersteuerung ZS, die zwei Zeiger Z1 und Z2 steuert. Die Zeiger Z1 geben den Anfang bzw. das Ende der

2

zu bewertenden Daten D1 im Pufferspeicher P an. Der durch den Zeiger Z1 angegebene Anfang der zu bewertenden Daten D1 ist den zuerst eingespeicherten Daten D zugeordnet, während das durch den Zeiger Z2 angegebene Ende den zuletzt zu bewertenden Daten D zugeordnet ist.

Die Zeigersteuerung ZS verändert ereignisgesteuert durch die Steuereinheit ST über die Steuersignale SS jeweils den Anfang und das Ende der Daten D1, um möglichst schnell eine Sequenz SE in den Daten D1 zu erkennen. Die Steuerung des Zeigers Z1 erfolgt in der Weise, daß immer dann, wenn in den Daten D1 weder eine Sequenz SE noch ein Teil einer anderen Sequenz erkannt wird, der Zeiger Z1 um eine Einheit in Richtung zum Ende verschoben wird, d. h. das jeweils älteste Datum D1 wird nicht mehr berücksichtigt. Die Steuerung des Zeigers Z2 erfolgt in der Weise, daß immer dann, wenn in den Daten D1 ein Teil einer Sequenz SE erkannt wird, der Zeiger Z2 um eine Einheit über das Ende hinaus erhöht wird, d. h. jeweils ein neues Datum D1 hinzukommt. Wenn eine vollständige Sequenz SE erkannt wird, erfolgt beispielsweise ein Zurücksetzen dadurch, daß die Positionen der Zeiger Z1 und Z2 übereinstimmen, d. h. die Daten D1 gelöscht werden. Bei der Notwendigkeit, sich gegenseitig überlappende Sequenzen zu erkennen, kann bei gleichzeitiger Verringerung der Dynamik eine differenzierte Behandlung der Zeiger Z1 und Z2 vorgenommen werden.

Weitere Einzelheiten des Verfahrens werden zusammen mit dem in FIG 2 dargestellten Beispiel näher erläutert.

Bei der Darstellung in FIG 2 wird angenommen, daß in einer Folge von Daten D aus den Zeichen ABCABCABD eine Sequenz SE mit den Zeichen ABCABD erkannt werden soll. Es ist jeweils die Veränderung der Zeiger Z1 und Z2 und das Ergebnis des Vergleichs in der Steuereinheit ST angegeben, wobei T das Erkennen eines Teils der Sequenz SE bedeutet, S das Erkennen der vollständigen Sequenz SE bedeutet und N bedeutet, daß weder ein Teil der Sequenz SE noch die vollständige Sequenz SE erkannt wurde.

Es wird davon ausgegangen, daß der Vergleich bei mindestens zwei Zeichen D1 in dem Pufferspeicher P, nämlich den Zeichen AB begonnen wird. Die Steuereinheit ST erkennt einen Teil der Sequenz SE und durch das Signal T wird der Zeiger Z2 um eine Einheit verschoben, d. h. das Zeichen C wird in den Pufferspeicher P übernommen. Wiederum wird ein Signal T erzeugt und dieser Vorgang wiederholt sich solange, bis die Zeichen ABCABC in dem Pufferspeicher P eingespeichert sind und als Daten D1 der Steuereinheit ST zugeführt werden. Die Daten D1 unterscheiden sich von der gewünschten Sequenz durch das letzte Zeichen C und es wird das Signal N erzeugt, da die Daten D1 weder einen Teil der Sequenz SE noch die vollständige Sequenz SE bedeuten. In Abhängigkeit davon wird nun der Zeiger Z1 um eine Einheit erhöht, d. h. das erste Zeichen A wird abgestreift. Wiederum ist das Vergleichsergebnis negativ und dieser Vorgang wiederholt sich solange, bis die Daten D1 nur noch die Zeichen ABC enthalten. Diese Zeichen stellen wieder einen Teil der gewünschten Sequenz SE dar, so daß dann wieder der Zeiger Z2 um eine Einheit erhöht wird. Dieser Vorgang wiederholt sich solange, bis die Daten D1 aus den Zeichen ABCABD gebildet werden und die vollständige Sequenz SE erkannt wird, so daß die Steuereinheit ST das Signal S erzeugt, mit dem die Gleichheit der Daten D1 und der gewünschten Sequenz SE angezeigt wird und das Ausgangssignal AS abgibt. Anschließend können die Daten D1 im Pufferspeicher P dadurch gelöscht werden, daß der Zeiger Z1 auf dieselbe Position von Z2 gebracht wird. Mit den nächstkommenden Zeichen der Daten D wird dann der Zeiger Z2 wieder erhöht und die nächsten Daten D1 werden an die Steuereinheit ST abgegeben. Die Steuerung der Zeiger Z1 und Z2 ist lediglich symbolisch gemeint und es kann selbstverständlich auch eine Verschiebung der Daten D1 im Pufferspeicher P bei Feststehen mindestens eines Zeigers erfolgen.

Bei dem in FIG 2 dargestellten Beispiel wurden die Daten D1 jeweils nur mit einer Sequenz SE verglichen, jedoch ist es zweckmäßig, zumindest am Anfang die Daten D1 mit allen im Speicher SP gespeicherten Sequenzen SE zu vergleichen, um eine Übereinstimmung zumindest mit Teilen der Sequenzen SE festzustellen.

Zur Erhöhung der Dynamik ist es auch zweckmäßig, den Vergleich erst dann zu beginnen, wenn die Länge der Daten D1 einen Wert erreicht hat, der nicht kleiner ist als die Länge der kleinsten im Speicher SP gespeicherten Sequenz SE. Auch ist es zweckmäßig, den Vergleich nur mit denjenigen Sequenzen SE auszuführen, deren Längen größer oder gleich ist der Länge der Daten D1.

Eine weitere Erhöhung der Dynamik ergibt sich bei der Einschränkung in der Erkennbarkeit von überlagerten Sequenzen. Wenn, wie oben angegeben, bei dem Auftreten des Ausgangssignals AS die Positionen der beiden Zeiger Z1 und Z2 zusammenfallen, können solche Sequenzen nicht erkannt werden, die teilweise überlagert sind. Um auch derartige Fälle zu erfassen, kann der Vergleich fortgesetzt werden, wenn die erkannte Sequenz SE beispielsweise eine Teilsequenz einer anderen Sequenz SE ist, indem nach dem Erkennen der Sequenz SE der Zeiger Z1 um ein Zeichen erhöht wird, während der Zeiger Z2 fixiert bleibt.

Für die Erhöhung der Dynamik ist es somit erforderlich, die Längen der Sequenzen SE zu erkennen. Zu diesem Zweck sind sie jeweils in Form eines Blockes, wie er in FIG 3 dargestellt ist, in dem Speicher SP gespeichert. Falls die Sequenzen SE beispielsweise Dienstsignale bei einer Fernschreibverbindung sind, beginnt jeder Block mit einem Buchstabenzeichen BU. Anschließend wird eine Gruppe GR angegeben, zu der die Sequenz SE gehört. Dann wird die Länge L der Sequenz SE und schließlich die Sequenz SE selbst angegeben.

Danach folgt die nächste Sequenz wieder beginnend mit einem Buchstabenzeichen BU. Das Ende aller Sequenzen im Speicher SP wird durch zwei aufeinanderfolgende Buchstabenzeichen BU gekennzeichnet. Das Buchstabenzeichen BU ist selbst nicht Bestandteil einer Sequenz.

Da bei einer Übertragung der Daten D über eine Fernschreibverbindung zwischen den Daten D nicht abdruckbare Zeichen, wie beispielsweise das Buchstabenzeichen BU, Ziffernzeichen, Zeichen "Wagenrücklauf" usw. auftreten können, werden diese zur Erhöhung der Effektivität vor dem Einspeichern in den Pufferspeicher P abgestreift.

Die Schaltungsanordnung, wie sie in FIG 1 dargestellt ist, wird zweckmäßigerweise aus mindestens einem Mikrocomputer gebildet, der programmgesteuert die Einspeicherung der Daten D in dort vorgesehene Register, die Steuerung der Zeiger Z1 und Z2 und den Vergleich der Sequenzen SE mit den Daten D1 steuert.

## Patentansprüche

1. Verfahren zum Erkennen vorgegebener Sequenzen in einer Folge von Daten, wobei die Sequenzen in einem Speicher gespeichert sind, wobei die Daten in einem Pufferspeicher gespeichert werden und wobei die gespeicherten Daten mit den Sequenzen aufeinanderfolgend verglichen werden und bei Gleichheit ein Ausgangssignal abgegeben wird, **dadurch gekennzeichnet,** daß der den zuerst eingespeicherten Daten (D1) zugeordnete Anfang und das den zuletzt eingespeicherten Daten (D1) zugeordnete Ende der mit den Sequenzen (SE) jeweils zu vergleichenden Daten (D1) derart gesteuert wird, daß bei einer fehlenden Übereinstimmung der Daten (D1) mit wenigstens einem Teil einer Sequenz (SE) der Anfang aufeinanderfolgend zum Ende hin solange verschoben wird, bis eine Übereinstimmung mit wenigstens einem Teil der Sequenz (SE) vorhanden ist und daß bei einer Übereinstimmung mit einem Teil der Sequenz (SE) das Ende durch ein Einspeichern von weiteren Daten (D1) derart solange verschoben wird, bis eine vollständige Übereinstimmung mit einer Sequenz (SE) vorhanden ist oder bis keine Übereinstimmung mehr vorhanden ist.

2. Verfahren nach Anspruch 1, **dadurch gekennzeichnet,** daß die Steuerung des Anfangs und des Endes unter Verwendung von zwei Zeigern (Z1, Z2) erfolgt, die jeweils den Anfang und das Ende kennzeichnen.

3. Verfahren nach Anspruch 1 oder Anspruch 2, **dadurch gekennzeichnet,** daß beim Erkennen einer vollständigen Sequenz (SE) der Anfang und das Ende auf dieselbe Stelle eingestellt werden.

4. Verfahren nach einem der Ansprüche 1 bis 3, **dadurch gekennzeichnet,** daß die Sequenzen (SE) in dem Speicher (SP) unter Angabe ihrer Längen (L) gespeichert sind.

5. Verfahren nach einem der Ansprüche 1 bis 4, **dadurch gekennzeichnet,** daß der Vergleich nur dann begonnen wird, wenn der Abstand zwischen dem Anfang und dem Ende zumindest gleich ist der Länge (L) einer minimalen Sequenz (SE).

6. Verfahren nach einem der Ansprüche 1 bis 5,**dadurch gekennzeichnet,** daß der Vergleich nur dann durchgeführt wird, wenn der Abstand zwischen dem Anfang und dem Ende kleiner oder gleich ist der Länge (L) der jeweils zu überprüfenden Sequenz (SE).

7. Verfahren nach einem der Ansprüche 1 bis 6, **dadurch gekennzeichnet,** daß die mit den Sequenzen (SE) zu vergleichenden Daten (D1) nur abdruckbare Zeichen enthalten und alle nicht abdruckbaren Zeichen vor dem Vergleichen entfernt werden.

8. Schaltungsanordnung zum Erkennen vorgegebener Sequenzen in einer Folge von Daten, wobei die Sequenzen in einem Speicher gespeichert sind, wobei die Daten in einem Pufferspeicher gespeichert werden und wobei die gespeicherten Daten mit den Sequenzen aufeinanderfolgend verglichen werden und bei Gleichheit ein Ausgangssignal abgegeben wird, **gekennzeichnet durch** eine Zeigersteuerung (ZS), die jeweils den Anfang und das Ende der zu vergleichenden Daten (D1) angibt und durch eine Steuereinheit (ST), die an die Zeigersteuerung (ZS) ereignisgesteuert Signale (SS) zum Verschieben des Anfangs und des Endes der zu vergleichenden Daten (D1) abgibt, die jeweils den Vergleich der Daten (D1) mit den Sequenzen (SE) durchführt und die bei Gleichheit das Ausgangssignal (AS) abgibt.

9. Schaltungsanordnung nach Anspruch 8, **dadurch gekennzeichnet,** daß die Zeigersteuerung (ZS) und die Steuereinheit (ST) aus mindestens einem Mikrocomputer gebildet werden.

## Claims

1. Method for recognising given sequences in a string of data, in which the sequences are stored in a memory, in which the data are stored in a buffer memory, and in which the stored data are successively compared with the sequences and an output signal is output if they match, characterised in that the beginning that is associated with the first data (D1) stored and the end that is associated with the last data (D1) stored of the data (D1) to be compared with the sequences (SE) in each case is controlled in such a way that if the data (D1) do not match at least a part of a sequence (SE) the beginning is successively shifted towards the end until there is a match with at least a part of the sequence (SE), and in that if there is a match with a part of the sequence (SE) the end is shifted by storing further data (D1) in such a way until a complete match with a sequence (SE) is present or until no match is present any more.

2. Method according to Claim 1, characterised in that the control of the beginning and of the end is exercised using two pointers (Z1, Z2) which indicate the beginning and the end respectively.

3. Method according to Claim 1 or Claim 2, characterised in that when a complete sequence (SE) is recognised, the beginning and the end are set to the same position.

4. Method according to one of Claims 1 to 3, characterised in that the sequences (SE) are stored in the memory (SP) with specification of their lengths (L).

5. Method according to one of Claims 1 to 4, characterised in that the comparison commences only if the distance between the beginning and the end is at least equal to the length (L) of a minimum sequence (SE).

6. Method according to one of Claims 1 to 5, characterised in that the comparison is only carried out if the distance between the beginning and the end is less than or equal to the length (L) of the sequence (SE) to be checked in each case.

7. Method according to one of Claims 1 to 6, characterised in that the data (D1) to be compared with the sequences (SE) contain only printable characters and all non-printable characters are removed before the comparison.

8. Circuit arrangement for recognising given sequences in a string of data, in which the sequences are stored in a memory, in which the data are stored in a buffer memory, and in which the stored data are successively compared with the sequences and an output signal is output if they match, characterised by a pointer controller (ZS) which indicates the beginning and the end of the data (D1) to be compared in each case, and by a control unit (ST), which outputs to the pointer controller (ZS) event-controlled signals (SS) for shifting the beginning and the end of the data (D1) to be compared, which carries out the comparison of the data (D1) with the sequences (SE), and which outputs the output signal (AS) if they match.

9. Circuit arrangement according to Claim 8, characterised in that the pointer controller (ZS) and the control unit (ST) are formed by at least one micro-computer.

## Revendications

1. Procédé pour identifier des séquences prédéterminées dans une suite de données, selon lequel les séquences sont mémorisées dans une mémoire, les données sont mémorisées dans une mémoire tampon et les données mémorisées sont comparées successivement aux séquences et un signal de sortie est délivré en cas d'égalité, caractérisé par le fait que le début, associé aux données (D1) mémorisées en premier, et la fin, associée aux données (D1) mémorisées en dernier, des données (D1) devant être respectivement comparées aux séquences (SE), sont commandés de manière que, en cas de non coïncidence des données (D1) avec au moins une partie d'une séquence (SE), le début est décalé successivement vers la fin tant qu'il existe une coïncidence avec au moins une partie de la séquence (SE) et que, dans le cas d'une coïncidence avec une partie de la séquence (SE), la fin est décalée au moyen de la mémorisation d'autres données (D1) jusqu'à ce qu'il existe une coïncidence complète avec une séquence (SE) ou jusqu'à ce qu'il n'existe plus aucune coïncidence.

2. Procédé suivant la revendication 1, caractérisé par le fait que la commande du début et de la fin est réalisée moyennant l'utilisation de deux pointeurs (Z1,Z2), qui caractérisent respectivement le début et la fin.

3. Procédé suivant la revendication 1 ou 2, caractérisé par le fait que dans le cas de l'identification d'une séquence complète (SE), le début et la fin sont réglés au même emplacement.

4. Procédé suivant l'une des revendications 1 à 3, caractérisé par le fait que les séquences (SE) sont mémorisées dans la mémoire (SP) avec indication de leurs longueurs (L).

5. Procédé suivant l'une des revendications 1 à 4, caractérisé par le fait que la comparaison commence uniquement lorsque la distance entre le début et la fin est au moins égale à la longueur (L) d'une séquence minimale (SE).

6. Procédé suivant l'une des revendications 1 à 5, caractérisé par le fait que la comparaison est exécutée uniquement lorsque la distance entre le début et la fin est inférieure ou égale à la longueur (L) de la séquence (SE) devant être respectivement contrôlée.

7. Procédé suivant l'une des revendications 1 à 6, caractérisé par le fait que les données (D1), qui doivent être comparées aux séquences (SE), contiennent uniquement des caractères pouvant être imprimés et que tous les caractères, qui ne peuvent pas être imprimés, sont éliminés avant la comparaison.

8. Montage pour identifier des séquences prédéterminées dans une suite de données, dans lequel les séquences sont mémorisées dans une mémoire, les données sont mémorisées dans une mémoire tampon et les données mémorisées sont comparées successivement aux séquences et un signal de sortie est délivré en cas d'égalité, caractérisé par un dispositif de commande de pointeurs (ZS), qui indique respectivement le début et la fin des données (DE) devant être comparées, et par une unité de commande (ST), qui envoie, d'une manière commandée en fonction des évènements, à l'unité de commande de pointeurs (ZS), des signaux (SS) servant à déplacer le début et la fin des données (D1) devant être comparées et qui exécute respectivement la comparaison des données (D1) aux séquences (SE) et délivre, en cas d'égalité, le signal de sortie (AS).

9. Montage suivant la revendication 8, caractérisé par le fait que l'unité de commande de pointeurs (ZS) et l'unité de commande (ST) sont formées par au moins un micro-ordinateur.

# FIG 1

# FIG 3

| BU |
|----|
| GR |
| L |
| SE |

# FIG 2

| Z1 | D1 | ZZ | Ergebnis |
|----|----|----|----------|
| | • | | |
| | A B | | T |
| | A B C | +1 | T |
| | A B C A | +1 | T |
| | A B C A B | +1 | T |
| | A B C A B C | +1 | N |
| +1 | B C A B C | | N |
| +1 | C A B C | | N |
| +1 | A B C | | T |
| | A B C A | +1 | T |
| | A B C A B | +1 | T |
| | A B C A B D | +1 | S |
| | • | | |
| | • | | |
| | • | | |